# EUROPEAN PATENT APPLICATION

(11) **EP 2 065 739 A1**
(43) Date of publication of application: **03.06.2009**
(21) Application number: 08158513.5
(22) Date of filing: 18.06.2008
(51) Int. Cl.: G02B 6/36

(54) **Non-contact connector**

(30) Priority: 27.11.2007 JP 2007305509
(71) Applicant: Chubu Nihon Maruko Co.,Ltd, Komaki-shi, Aichi 485-0806 (JP)
(72) Inventor: Koitabashi, Hiroyuki, Aichi 485-0806 (JP)
(74) Representative: Stebbing, Timothy Charles

(57) **Abstract**

A non-contact connector (10), which has a rotation-side optical element (13) positioned on a rotating body (1) which rotates about a rotation axis (4), and a fixed-side optical element (23) positioned on a fixed body (2), and which performs data transmission and reception without contact between the rotation-side optical element and the fixed-side optical element, the non-contact connector further having a reflecting body (7), which reflects light emitted from the rotation-side optical element (13) or from the fixed-side optical element (23) on the rotation axis (4); and the reflecting body being a cubic mirror, the outer shape of which is a rectangular parallelepiped, and which is formed by evaporation depositing a thin metal film on one face of one of two rectangular parallelepiped members that are transparent from the visible wavelength range to the infrared wavelength range, and then bonding to the same to the other one of the rectangular parallelepiped members, with the evaporation-deposited film face intervening therebetween.

## Description

This application is based upon and claims the benefit of priority from the prior Japanese Patent Application No. 2007-305509, filed on November 27, 2007.

The present invention relates to a non-contact connector performing data transmission and reception without contact.

With advances in wireless technology in the past, contact-free connectors which perform data exchange without contact, while having connector functions, have begun to appear.

For example, by using a contact-free connector to connect a rotatable camera to a signal processing portion, image signals captured by the camera can be transmitted without contact to the signal processing portion.

As technology for non-contact connectors of the prior art, there are non-contact connectors, comprising a rotating body and a fixed body, in which electricity is fed from the fixed body to portions of the rotating body without contact (see for example Japanese Patent Laid-open No. 2002-75760).

Further, there are also non-contact connectors in which, by providing a reflecting mirror connected to a gear on a rotating body, and exchanging data without contact between the rotating body and the fixed body via the reflecting mirror, the continuity of high-speed communication can be secured (see for example Japanese Patent Application No. 2005-277565 and Japanese Patent Application No. 2005-290472).

On the other hand, a metal evaporation-deposited mirror surface is formed by evaporation deposition of metal onto the external surface of glass or another transparent material, for use as a planar reflecting mirror with light made incident within the transparent material.

However, in the invention disclosed in Japanese Patent Laid-open No. 2002-75760, light-receiving element switching must be performed, and when data is transmitted at high speed this switching cannot keep pace, so that there is the problem that the continuity of high-speed communication cannot be secured.

Further, in the inventions disclosed in Japanese Patent Application No. 2005-277565 and Japanese Patent Application No. 2005-290472, even though continuity of high-speed communication can be secured, there is the problem that, when a reflecting mirror is placed on the straight line between a light-emitting element and a light-receiving element, there are cases in which light from the light-emitting element is blocked by the reflecting mirror.

Further, a non-contact connector is also required to be able to transmit and receive over a plurality of channels, in both directions between the rotation side and the fixed side.

Hence in light of the above, an embodiment of this invention may provide a non-contact connector capable of bidirectional communication between a rotation side and a fixed side.

A further embodiment of the invention may provide a non-contact connector which secures continuity of communication.

A non-contact connector of this invention, which has a rotation-side optical element positioned on a rotating body which rotates about a rotation axis, and a fixed-side optical element positioned on a fixed body, and which performs data transmission and reception without contact between the rotation-side optical element and the fixed-side optical element, includes, on the rotation axis, a reflecting body, which reflects light emitted from the rotation-side optical element or from the fixed-side optical element, and the reflecting body comprises a cubic mirror, the outer shape of which is a rectangular parallelepiped, and which is formed by evaporation depositing a thin metal film on one face of one of two rectangular parallelepiped members that are transparent from the visible wavelength range to the infrared wavelength range, and then bonding the same to the other one of the rectangular parallelepiped members, with the evaporation-deposited film face intervening therebetween.

By means of this invention, a non-contact connector can be provided which enables bidirectional communication between the rotation side and the fixed side. Also, by means of this invention a non-contact connector can be provided which secures continuity of communication.

Reference is made by way of example only, to the accompanying drawings in which:
Fig. 1 is a cross-sectional view of a non-contact connector.
Fig. 2 explains an optical path formed by a reflecting body.
Fig. 3 explains an optical path formed by a reflecting body.
Fig. 4(A) through Fig. 4(D) show configuration examples and similar of a cubic mirror.
Fig. 5(A) and Fig. 5(B) explain an optical path formed by a reflecting body.
Fig. 6 shows an example of the configuration of a planetary gear speed change device.
Fig. 7(A) and Fig. 7(B) show another example of the configuration of a planetary gear speed change device.
Fig. 8 explains an optical path formed by a reflecting body.
Fig. 9 explains an optical path formed by a reflecting body.
Fig. 10 shows another example of the configuration of a non-contact connector.
Fig. 11 explains power feeding without contact.
Fig. 12 shows an example of the configurations of a rotation-side electrical circuit portion and a fixed-side electrical circuit portion.
Fig. 13 shows an example of data to which channel identification symbols are added.

Below, preferred aspects for implementation of the invention are explained, referring to the drawings.

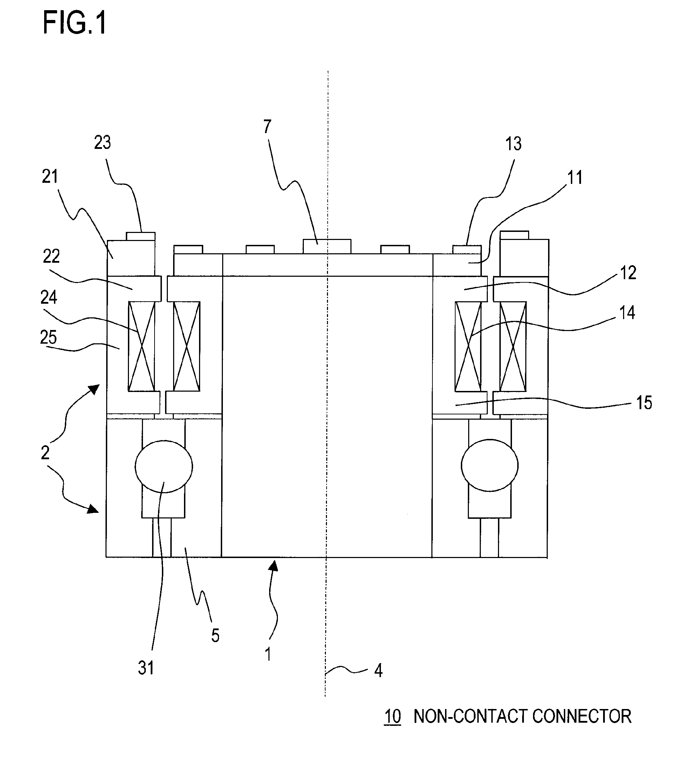

Fig. 1 shows an example of a non-contact connector 10 to which the invention is applied. The rotating body 1 is configured to enable rotation about the rotation axis 4. The fixed body 2 is fixed and placed on the periphery of the rotating body 1.

The rotating body 1 comprises a rotation-side electrical circuit portion 11, rotation-side holding portion 12, rotation-side optical element 13, rotation-side transformer windings 14, rotation-side transformer core 15, and reflecting body 7.

The rotation-side electrical circuit portion 11 is provided in the upper portion of the rotating body 1, and performs various data processing. For example, when a camera for capturing images is installed on the rotating body 1, image signals or similar from the camera are input to the rotation-side electrical circuit portion 11, and electrical signals causing the rotation-side light-emitting element 13 to emit light are output.

The rotation-side holding portion 12 is positioned in the lower portion of the rotation-side electrical circuit portion 11, and holds the rotation-side electrical circuit portion 11.

The rotation-side optical element 13 is positioned on a disc face of the rotating body 1 perpendicular to the rotation axis 4. This rotation-side optical element 13 emits light based on electrical signals from the rotation-side electrical circuit portion 11, and transmits data to the fixed-side optical element 23 without contact via the reflecting body 7. Also, the rotation-side optical element 13 receives data from the fixed-side optical element 23 via the reflecting body 7, and outputs the data to the rotation-side electrical circuit portion 11.

The rotation-side transformer windings 14 are in the lower portion of the rotation-side holding portion 12, positioned in an outer peripheral concavity of the rotating body 1. Power is supplied from the fixed body 2 through electromagnetic induction action, and power can be supplied to each of the portions of the rotating body 1 from these rotation-side transformer windings 14.

The rotation-side transformer core 15 is formed with a U-shaped cross-section so as to surround the rotation-side transformer windings 14. The rotation-side transformer core 15 houses the rotation-side transformer windings 14 in a concavity thereof, and together with the fixed body 2 forms a rotary transformer. The above-described rotation-side holding portion 12 is a portion of this rotation-side transformer core 15.

The reflecting body 7 is positioned on the rotation axis 4 of the rotating body 1, and is configured to enable rotation about the rotation axis 4. This reflecting body 7 reflects light emitted from each of the optical elements 13 and 23. Details of the reflecting body 7 are explained below.

Next, the fixed body 2 is explained. As shown in Fig. 1, the fixed body 2 comprises a fixed-side electrical circuit portion 21, fixed-side holding portion 22, fixed-side optical element 23, fixed-side transformer windings 24, and fixed-side transformer core 25.

The fixed-side electrical circuit portion 21 is provided on a disc of the fixed body 2. The fixed-side electrical circuit portion 21 is connected to the fixed-side optical element 23, and processes data received by the fixed-side optical element 23, and outputs the data to an external device connected to the fixed body 2. Also, the fixed-side electrical circuit portion 21 outputs data input from an external device to the fixed-side optical element 23.

The fixed-side holding portion 22 is positioned below the fixed-side electrical circuit portion 21, and holds the fixed-side electrical circuit portion 21.

The fixed-side optical element 23 is positioned on a flat disc of the fixed body 2 substantially parallel to the disc face of the rotating body 1 on which the rotation-side optical element 13 is placed. The fixed-side optical element 23 receives light emitted from the rotation-side optical element 13 without contact via the reflecting body 7, and outputs the received data to the fixed-side electrical circuit portion 21. Also, the fixed-side optical element 23 emits light based on data from the fixed-side electrical circuit portion 21, to transmit data to the rotation-side optical element 13 via the reflecting body 7. As shown in Fig. 1, the fixed-side optical element 23 forms an optical path with the rotation-side optical element 13 in a direction substantially perpendicular to the rotation axis 4.

The fixed-side transformer windings 24 are in a position opposing the rotation-side transformer windings 14, and are positioned on the inner periphery side of the fixed body 2. The fixed-side transformer windings 24 are supplied with power from an external device connected to the fixed body 2.

The fixed-side transformer core 25 is formed with a U-shape cross-section so as to surround the fixed-side transformer windings 24. The fixed-side transformer core 25 houses the fixed-side transformer windings 24 in a concavity thereof, and with the rotating body 1 forms a rotary transformer. The fixed-side holding portion 22 is a portion of this fixed-side transformer core 25.

The non-contact connector 10 comprises a rolling body 31 to smooth the rotational operation of the rotating body 1, for positioning of the rotating body 1 and fixed body 2, and similar. The rolling body 31 is positioned in the gap between the rotating body 1 and the fixed body 2. In order to make smooth the rotational operation of this rolling body 31, the rotating body 1 and fixed body 2 have an inner ring and an outer ring respectively. A bearing 5 is formed by this rolling body 31 and the inner ring and outer ring.

When smoothing of rotational operation of the rotating body 1, positioning, and similar are not necessary, the rolling body 31 can be omitted.

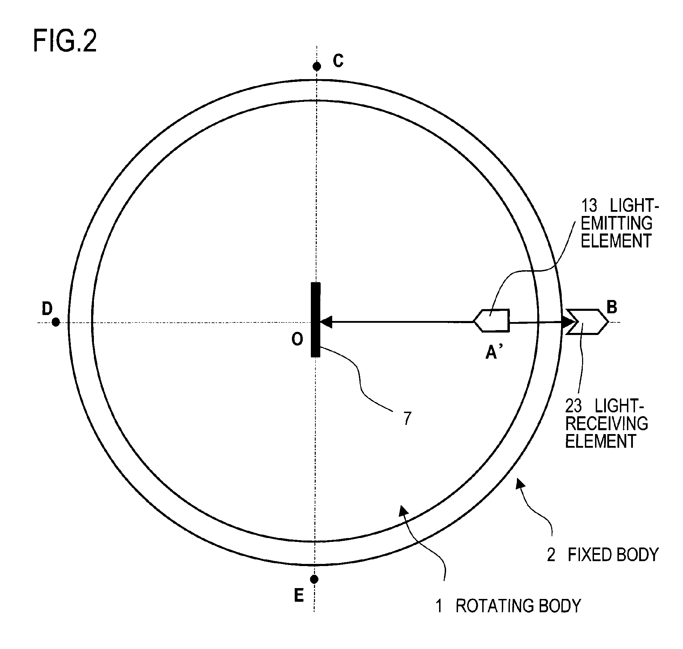

Next, the optical path formed between the rotation-side optical element 13 and the fixed-side optical element 23 is explained. Fig. 2 is one example, showing a top view of the non-contact connector 10. The rotation-side optical element 13 is a light-emitting element, and the fixed-side optical element 23 is a light-receiving element; the reflecting body 7 rotates about a rotation center O, which is the point of intersection of the rotation axis 4 with the rotating body 1.

As shown in the figure, a case is considered in which the rotation-side light-emitting element 13 and fixed-side light-receiving element 23 are positioned on a straight line toward the rotation center O, and the planar portion of the reflecting body 7 is on the line segment CE. In this case, when the rotation-side light-emitting element 13 emits light toward the reflecting body 7, the light is reflected by the reflecting body 7 and propagates toward the fixed-side light-receiving element 23. In this case, it is conceivable that the light-emitting element 13 may block light from the reflecting body 7, so that light cannot be received by the light-receiving element 23; but this can be avoided by, for example, providing the light-receiving element 23 at a position higher than the light-emitting element 13.

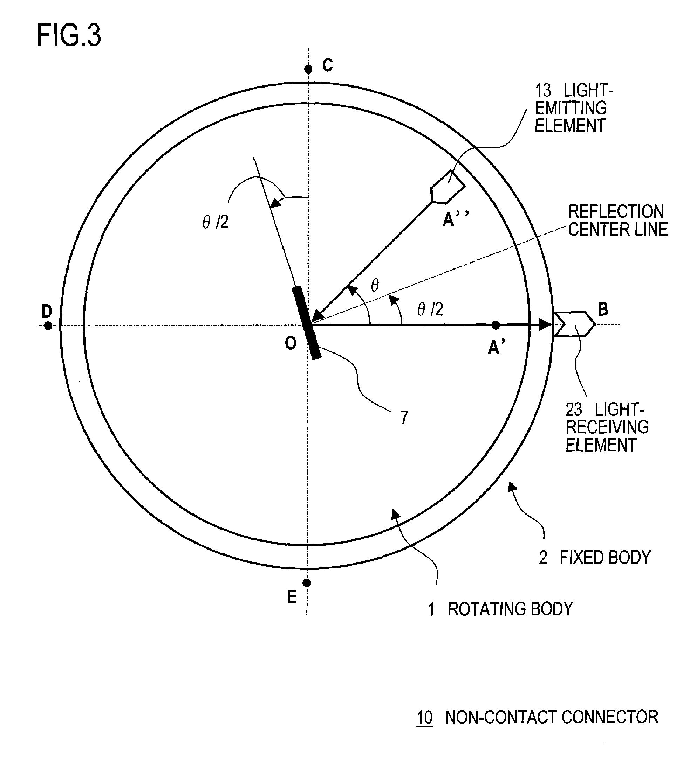

Next, as shown in Fig. 3, a case is considered in which the rotating body 1 rotates through a prescribed angle θ. In this case, the rotation-side light-emitting element 13 moves from position A' to position A''.

In general, when incident light is reflected by a mirror or other reflecting surface, the angle made by the incident light with the reflection center line perpendicular to the reflecting surface is equal to the angle made by the reflection center line with the reflected light. In the example of Fig. 3, the angle made by incident light from the light-emitting element 13 with the reflection center line (θ/2) is equal to the angle made by the reflection center line with the reflected light (θ/2).

On the other hand, the reflection center line moves in rotation about the rotation center O accompanying movement of the rotation-side optical element 13. If the reflecting surface of the reflecting body 7 is caused to rotate along this moving rotation center line, the angles made by the incident light and reflected light with the reflection center line are both θ/2, so that light emitted from the rotation-side optical element 13 is reflected by the reflecting body 7 and is always directed toward a specific fixed-side optical element 23.

Hence if the rotation velocity of the reflecting body 7 is made half the rotation velocity of the rotating body 1, then light emitted from the rotation-side light-emitting element 13 is always directed toward a specific fixed-side light-receiving element 23.

That is, the rotation-side optical element 13 and fixed-side optical element 23 are provided such that, when the fixed-side optical element 23 is positioned on the optical path line segment of light emitted from the rotation-side optical element 13 which is reflected by the reflecting body 7, an optical path is formed between the light-emitting element 13 and the light-receiving element 23 via the reflecting body 7. Thereafter, if the rotation velocity of the reflecting body 7 is made half the rotation velocity of the rotating body 1, then the reflecting surface of the reflecting body 7 rotates about the rotation axis 4, so that whatever the position of the rotation-side light-emitting element 13 accompanying rotation of the rotating body 1, an optical path is always formed with the fixed-side light-receiving element 23 in a specific position.

As shown in Fig. 3, when the rotation-side optical element 13 is positioned at position A'' accompanying rotation of the rotating body 1, the reflection center line is positioned at θ/2, and therefore light emitted from the rotation-side light-emitting element 13 is reflected by the reflecting body 7 and can be received by the fixed-side light-receiving element 23.

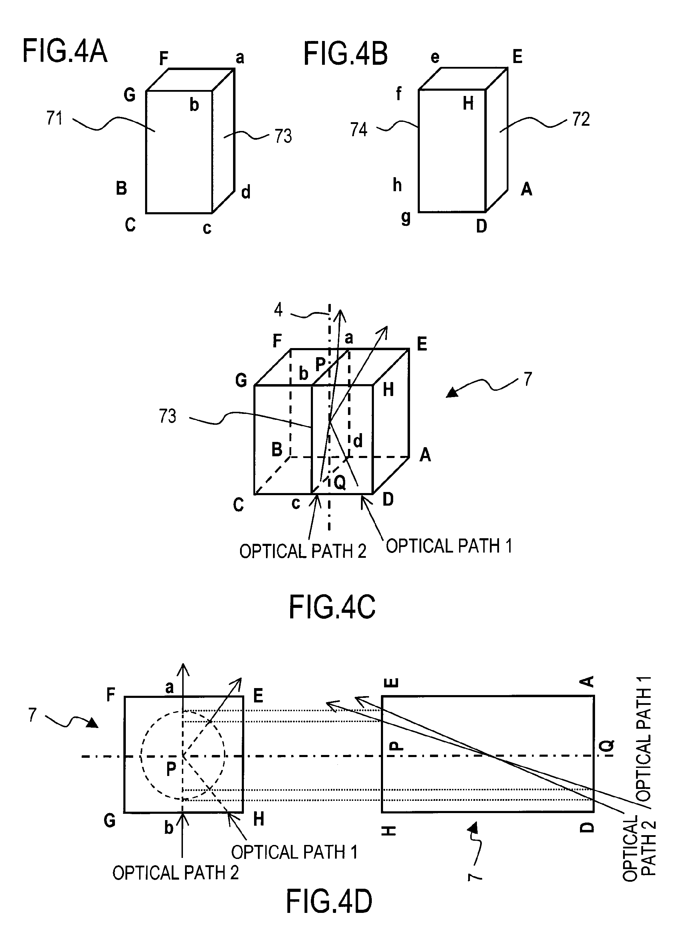

Fig. 4(A) through Fig. 4(D) show in detail an example of the configuration of a reflecting body 7. The reflecting body 7 of this embodiment is a planar mirror, configured by forming a metal evaporation-deposited mirror surface on the outer surface 73 of one of the parallelepipeds 71 among two parallelepipeds 71, 72 formed form transparent material, and then bonding this evaporation-deposited mirror surface to the other parallelepiped 72 in sandwich form, such that the thickness of the reflecting face is extremely thin, and moreover both faces are reflecting faces.

Fig. 4(A) and Fig. 4(B) show two transparent members 71, 72 with rectangular parallelepiped shapes, formed from transparent material. The face abcd 73 of the former parallelepiped aFGbdBCc is a planar mirror face onto which metal has been evaporation-deposited, and is bonded to the face efgh 74 of the latter parallelepiped EefHAhgD, to form a cubic mirror 7 with the shape of the parallelepiped EFGHABCD, which is the reflecting body 7.

Fig. 4(C) shows the shape of the cubic mirror 7 (parallelepiped EFGHABCD) and the optical function of the cubic mirror 7 as a planar mirror. The figure shows the optical path of a beam which is incident from face ABCD on the cubic mirror 7, and after being reflected by face abcd, is emitted from face EFGH. The center axis of the cubic mirror 7 is a straight line, placed on the rotation axis 4, passing through the center point P of edge ab and the center point Q of edge cd of the cubic mirror 7, and is a reflection point of the cubic mirror 7. In consideration of the resulting complexity, the refraction effect of the optical path due to the refractive indices of the transparent material at the time of incidence onto the cubic mirror 7 and at the time of emission therefrom, is not shown.

Fig. 4(D) shows details of the optical path; the lefthand diagram in Fig. 4(D) is a top view of Fig. 4(C), and the right-hand diagram shows a side view.

First, optical path 1 is an optical path in which light is incident on the center axis (rotation axis) 4 from face AdcD (in the face ABCD), and is emitted from face EabH (in the face EFGH). Next, optical path 2 is an optical path in which light is incident from line cd (in the face ABCD) toward the rotation axis 4, and is emitted from line ab. Of course there also exists optical paths in which light is emitted from face dBCc and light is emitted from face aFGb, but these can be handled entirely similarly to optical path 2, and so an explanation is omitted. In consideration of the resulting complexity, this figure likewise does not show the refraction effect of optical paths due to the difference in refractive indices of the transparent materials 71 and 72 when light is incident on and emitted from the cubic mirror 7.

The transparent members 71, 72 comprised by the cubic mirror 7 are transparent from the visible wavelength range to the near-infrared wavelength range, and visible-wavelength and near-infrared-wavelength light is reflected at the evaporation-deposited metal face 73. Hence by configuring the reflecting body 7 as this cubic mirror 7, infrared rays as well as visible light can be reflected, and so infrared ray communication between the rotating body 1 and fixed body 2 is also possible.

By means of such a cubic mirror 7, when the rotating body 1 rotates through 180° (θ = 180°), the optical path from the reflecting body (cubic mirror) 7 toward the light-receiving element 23 is continued by the evaporation-deposited metal face 73 without being interrupted. Compared with a case in which the reflecting body 7 comprises a reflecting mirror, the optical path to the light-receiving element 23 can be easily secured over all angles, without the need for such measures as reducing the thickness of the reflecting body 7.

When the rotating body 1 has rotated through 90° (θ = 90°), the cubic mirror 7 has rotated through 45°, and the reflection center line is positioned at 45°. At this time, the rotation-side light-emitting element 13 is positioned on the line segment CO, and light from the light-emitting element 13 reflected by the reflecting body 7 propagates toward the light-receiving element 23 at position B.

When the rotating body 1 has rotated through 270° (θ = 270°), the cubic mirror 7 has rotated through 135° (θ/2), and the reflection center line is positioned at 135°. The rotation-side optical element 13 is positioned on the line segment EO, and light emitted from the rotation-side light-emitting element 13 propagates toward the fixed-side light-receiving element 23 at position B.

Hence no matter to which position the rotation-side optical element 13 moves accompanying rotation of the rotating body 1, an optical path is always formed with the fixed-side light-receiving element 23 in a specific position. Therefore, an uninterrupted optical path is formed between the rotation-side optical element 13 and the fixed-side optical element 23, and continuity of communication is secured. From the reversibility of light, similar remarks apply if the rotation-side optical element 13 is a light-receiving element and the fixed-side optical element 23 is a light-emitting element.

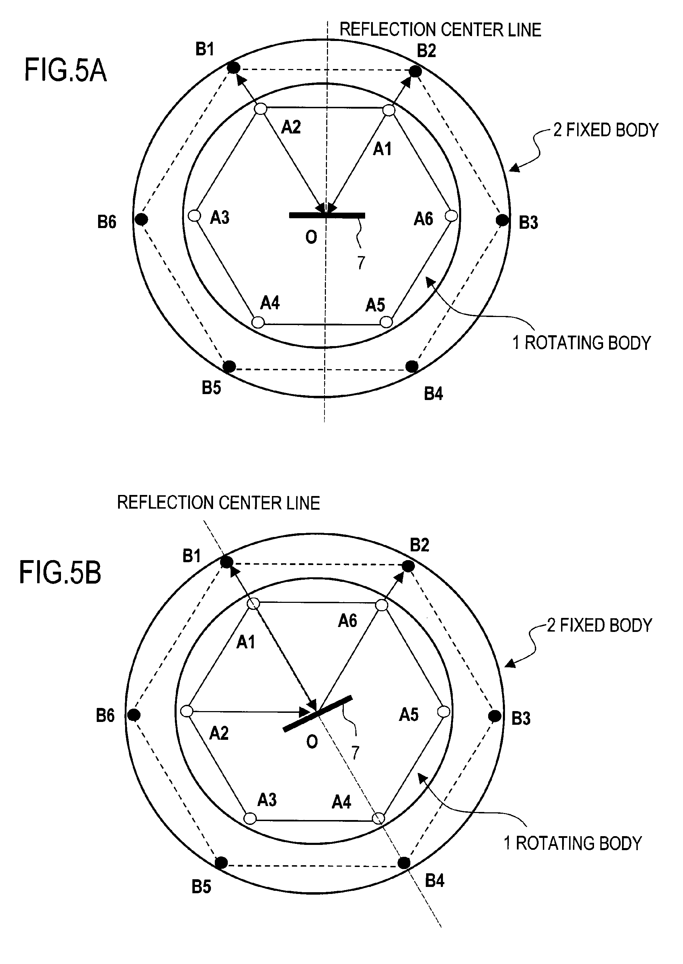

Next, a case is explained, referring to Fig. 5(A) and Fig. 5(B), in which a plurality of light-emitting elements 13 are provided on the rotating body 1, and a plurality of light-receiving elements 23 corresponding thereto are provided on the fixed body 2. In Fig. 5(A) and Fig. 5(B), an example is shown in which the rotation-side light-emitting elements 13 and fixed-side light-receiving elements 23 are positioned at each of the vertices of regular hexagons.

In this example also, each of the rotation-side optical elements 13 and fixed-side optical elements 23 are arranged such that, when a fixed-side optical element 23 is positioned on the optical path line segment of light emitted from a rotation-side optical element 13 and reflected by the cubic mirror 7, an optical path is formed between the rotation-side optical element 13 and the fixed-side optical element 23, with the reflecting body 7 intervening.

The optical path in the position of Fig. 5(A) is considered. The reflecting surface of the cubic mirror 7 is positioned parallel to the line segment connecting B3 and B6. In this case, the reflection center line is positioned as shown in the figure. Hence light emitted from the rotation-side light-emitting element A1 is reflected by the reflecting body 7, and propagates toward the fixed-side light-receiving element B1. Further, the rotation-side light-emitting element A2 also forms an optical path with the corresponding fixed-side light-receiving element B2. Also, similarly to the description above, an optical path is formed from the rotation-side light-emitting element A3 toward the fixed-side light-receiving element B3. Because the cubic mirror 7 has reflecting surfaces on both sides of the evaporation-deposited film 73, entirely similar statements obtain for the other light-emitting elements A4 through A6.

Here, a case is considered in which the rotating body 1 rotates counterclockwise through 60°, as shown in Fig. 5(B). Each of the light-emitting elements A1 through A6 also moves 60°. At this time, the cubic mirror 7 has half the rotation velocity of the rotating body 1, and so rotates through 30°. Hence the reflection center line is positioned as shown in the figure. The rotation-side light-emitting element A1 forms an optical path toward the fixed-side light-receiving element B1, and the rotation-side light-emitting element A2 forms an optical path toward the fixed-side light-receiving element B2. Because both sides of the evaporation-deposited film 73 of the cubic mirror 7 are reflecting surfaces, similar statements obtain for the other light-emitting elements A3 through A6.

Even when a plurality of rotation-side light-emitting elements 13 and fixed-side light-receiving elements 23 are arranged in this way, optical paths can always be formed between each of the rotation-side light-emitting elements 13 and the corresponding fixed-side light-receiving elements 23. Hence even when a plurality of rotation-side light-emitting elements 13 and fixed-side light-receiving elements 23 exist, uninterrupted optical paths are formed between the elements 13 and 23, and the continuity of communication can be secured. Through communication by the pluralities of optical elements 13 and 23, multichannel data transmission and reception in the non-contact connector 10 can be performed.

In order to facilitate explanation of the example shown in Fig. 5(A) and Fig. 5(B), the elements 13 and 23 were arranged at 60° intervals; but the intervals are not limited to 60°, and any arbitrary positions may be employed. This is because if the rotation velocity of the reflecting body (cubic mirror) 7 is made half the rotation velocity of the rotating body 1, optical paths can always be formed between the rotation-side light-emitting elements 13 and the corresponding fixed-side light-receiving elements 23. At this time, the initial angular position of the reflecting body 7 may be set to an inclination of the reflecting body 7 such that, for example, an optical path is formed between the rotation-side light-emitting elements 13 and the light-receiving elements 23.

Also, in the example shown in Fig. 5(A) and Fig. 5(B), the positions of the rotation-side optical elements 13 are such that the distances from the rotation center O are constant; but distances to positions may be chosen arbitrarily. In this case, each of the rotation-side optical elements 13 is provided on the rotating body 1 with the corresponding mounting angles α set such that an optical path is formed with the corresponding fixed-side optical element 23.

Further, the example shown in Fig. 5(A) and Fig. 5(B) was explained taking the rotation-side optical elements 13 to be light-emitting elements and the fixed-side optical elements 23 to be light-receiving elements; but from the reversibility of light, optical paths are formed entirely similarly if the rotation-side optical elements 13 are light-receiving elements and the fixed-side optical elements 23 are light-emitting elements. By this means, simultaneous bidirectional data transmission and reception in the non-contact connector 10 can be performed.

Further, similar statements obtain for an intermixed arrangement, in which a portion of the plurality of rotation-side optical elements 13 are light-emitting elements, and the remainder are light-receiving elements. For example, an intermixed arrangement is possible in which the rotation-side optical element A1 is a light-emitting element and the optical element A2 is a light-receiving element, while the fixed-side optical element B1 is a light-receiving element and the optical element B2 is a light-emitting element.

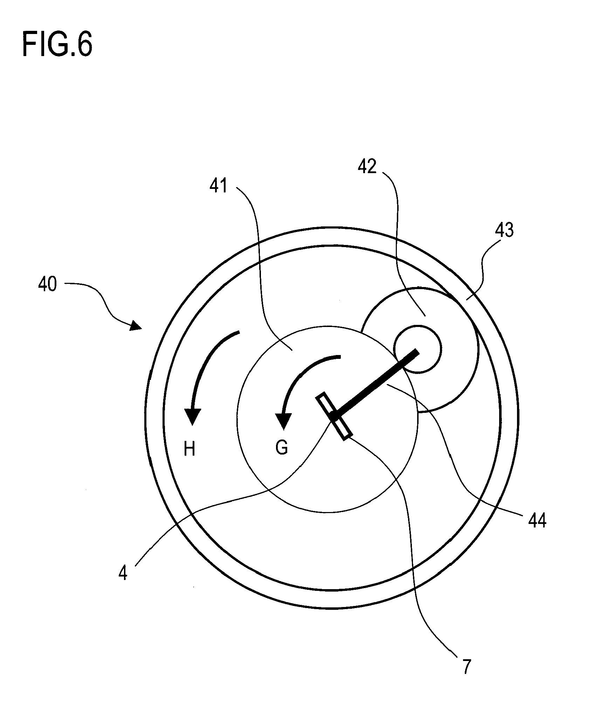

Next, rotation control in which the rotation velocity of the reflecting body 7 is made half the rotation velocity of the rotating body 1 is explained. Fig. 6 shows a planetary gear speed change device 40 as one example. This planetary gear speed change device 40 is for example provided within the rotating body 1.

The planetary gear speed change device 40 comprises a sun gear 41, planetary gear 42, internal gear 43, and arm 44. The sun gear 41 is installed in the center of the rotating body 1. Because the rotation axis of this sun gear 41 coincides with the rotation axis on the side of the main unit device which rotates the rotating body 1, the sun gear 41 rotates about the rotation axis 4 together with the rotating body 1.

On the other hand, the planetary gear 42 is arranged on the outside of the sun gear 41, and is configured so as to rotate accompanying rotation of the sun gear 41, while also moving between the sun gear 41 and the internal gear 43. The planetary gear 42 has a two-stage construction, comprising a gear which meshes with the internal gear 43, on which is a gear (fixed gear) which meshes with the sun gear 41. The arm 44 is placed on the line segment connecting the center of the planetary gear 42 with the center of the reflecting body 7 (position on the rotation axis 4).

Here, when the sun gear 41 rotates in direction G due to rotation of the main unit device, the planetary gear 42 moves in direction H. As a result of this move, the reflecting body 7 also rotates in H direction. Here by setting the ratio of the number of teeth of the sun gear 41 to the number of teeth of the planetary gear 42 to a prescribed value, the movement velocity of the planetary gear 42 is half the rotation velocity of the sun gear 41. By this means, the reflecting body 7 rotates about the rotation axis 4 at half the rotation velocity of the rotating body 1.

Next, another example of rotation control to halve the rotation velocity or rotation angle of the reflecting body 7 is explained.

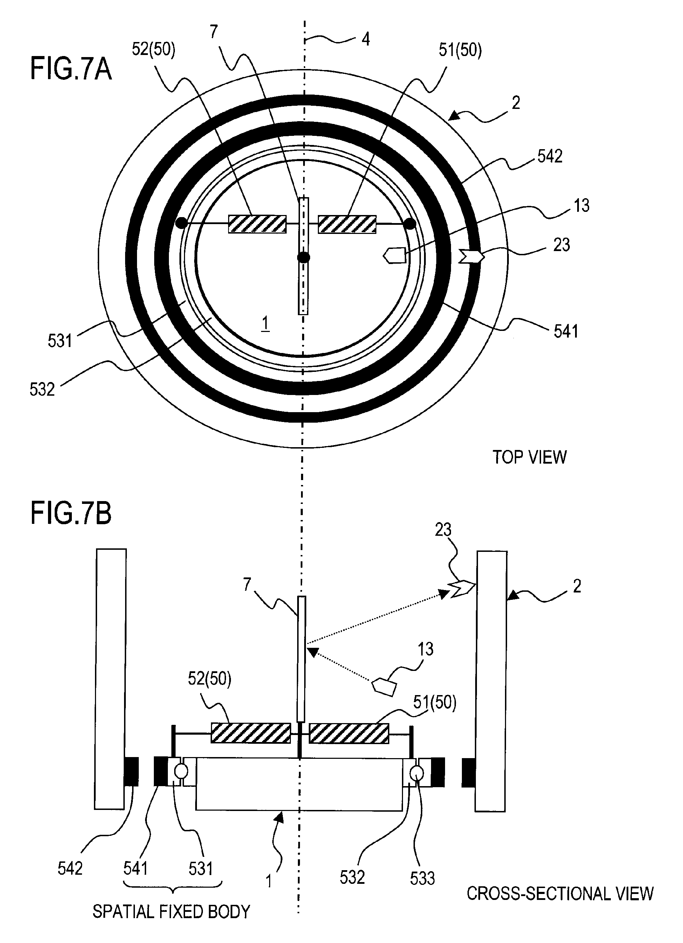

Fig. 7(A) is a top view of the non-contact connector 10, and Fig. 7(B) is a cross-sectional view of the non-contact connector 10. As shown in the figures, the rotating body 1 comprises, in order from the side of the rotation axis 4, an inner ring 532, rolling body 533, outer ring 531, and rotation-side magnet 541. The above-described bearing 5 is formed by the inner ring 532, rolling body 533, and outer ring 531. The fixed body 2 comprises a fixed-side magnet 542, at a position opposed to the rotation-side magnet 541.

And, two elastic bodies 51, 52 are further comprised by the rotating body 1. These two elastic bodies 51, 52 both have substantially the same elastic characteristics. As shown in Fig. 7(A), the two elastic bodies 51, 52 are connected in series. One end of the elastic body 51 is connected to the inner ring 532, and one end of the elastic body 52 is connected to the outer ring 531.

Because the rotation-side magnet 541 and the fixed-side magnet 542 are placed in mutual opposition, the two magnets 541 and 542 are spatially coupled by means of magnetic force. Hence even when the rotating body 1 rotates, the rotation-side magnet 541 does not rotate due to magnetic force with the fixed-side magnet 542. Also, because the outer ring 531 is also integrally coupled with the rotation-side magnet 541, the outer ring 531 does not rotate. A spatially fixed body is formed by the rotation-side magnet 541 and the outer ring 531.

That is, because one end of the elastic body 52 is connected to the spatially fixed body of the rotating body 1, there is no rotation even when the rotating body 1 rotates. On the other hand, one end of the elastic body 51 is connected to the inner ring 532, so that there is rotation together with rotation of the rotating body 1. An elastic body driving device 50 is formed by the two elastic bodies 51 and 52.

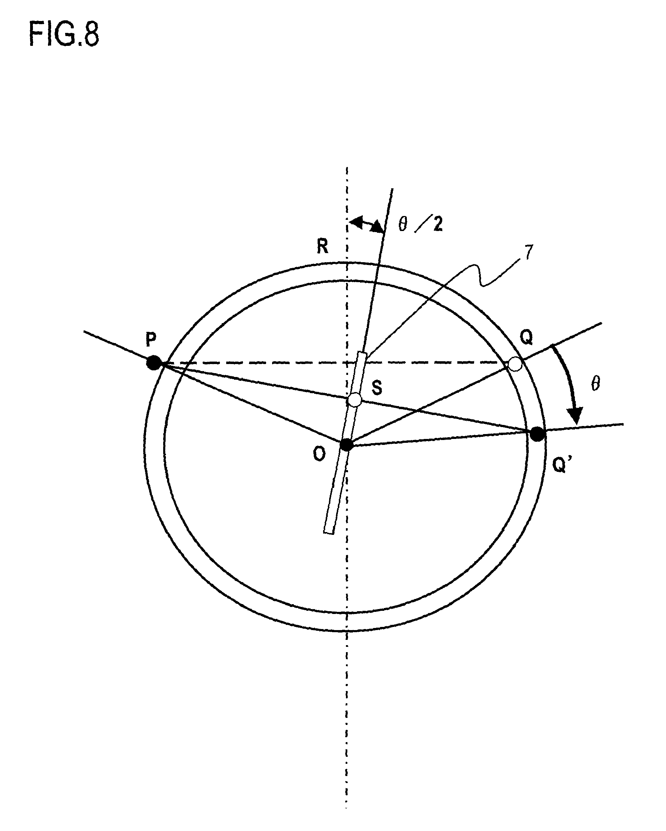

Next, operation of the elastic driving device 50 is explained. Fig. 8 is used to explain this operation. From a time at which the two elastic bodies 51, 52 are positioned on the line segment PQ, rotation of the rotating body 1 through a rotation angle θ is considered. That is, a case in which one end of the elastic body 51 has moved from point Q to point Q' is considered.

When, due to rotation of the rotating body 1, the two elastic bodies 51, 52 have been stretched by an amount "x", because the elastic characteristics of the two elastic bodies 51, 52 are substantially the same, the elastic body 51 is stretched by "x/2", and the elastic body 52 is also stretched by "x/2".

Here, two triangular shapes OPS and OQ'S are considered; the two triangular shapes are the same shape. This is because the line segment PS is extended by "x/2", and the line segment SQ' is also extended by "x/2".

When the rotating body 1 rotates by θ, the line segment PS is extended by "x/2", so that the reflecting body 7 rotates through "θ/2" from the position on the line segment OR. Hence the reflecting body 7 can be made to rotate half the amount of the rotation angle of the rotating body 1.

In this way, one end of the elastic body 51 is connected at a position (point Q, point Q') above the rotating body 1 and rotates together with the rotating body 1, and the other hand of the elastic body 52 is connected at a position (point P) above the rotating body 1 which is spatially coupled by magnetic force with the fixed body 2 and does not rotate with rotation of the rotating body 1. The reflecting body 7 is provided such that the reflecting surface of the reflecting body 7 is on the line segment OR (line segment OS) connecting the substantial center of the line segment PQ (line segment PQ') with the rotation axis 4.

As shown in Fig. 7(A) and elsewhere, in this example of an elastic body driving device 50 also, the rotating body 1 and fixed body 2 can be configured separately. Hence the rotating body 1 and fixed body 2 can be easily combined to form optical paths, such as for example by a mating operation, so that an optical connector and optical outlet without connection can easily be fabricated.

The elastic bodies 51 and 52 in actuality comprise springs, rubber members, or similar. The elastic bodies 51, 52 may comprise a single body rather than two bodies, or may comprise three or more bodies. Further, one end of the elastic body 51 may be connected at any position so long as the position rotates with the rotating body 1, and one end of the elastic body 52 may be connected at any position so long as the position is on the spatially fixed body of the rotating body 1.

In order to halve the rotation velocity or rotation angle of the reflecting body 7, in addition to the planetary gear speed change device 40, for example a motor or other reflecting body driving device which rotates the reflecting body 7 and a detection device which detects the rotation velocity or rotation angle of the rotating body 1 may be provided, and based on detection results of the detection device, feedback control can be applied to the reflecting body driving device such that the rotation velocity or rotation angle of the reflecting body 7 is halved.

Next, the initial angular position of the reflecting body 7 when employing a reflecting body driving device is explained.

When employing the above-described planetary gear speed change device 40, the reflecting body 7 is coupled to the rotating body 1 by means of gears, so that there is no variation in the positional relationship of the reflecting body 7 relative to the rotating body 1. That is, there is no need to set the initial position of the reflecting body 7. However, when employing a reflecting body driving device, if a brake mechanism or similar is not installed, there are cases in which the initial position of the reflecting body 7 must be set. In this case, for example, if the position in which the rotation-side light-emitting element 13 and the fixed-side light-receiving element 23 are positioned on a straight line toward the rotation center O of the reflecting body 7 is taken to be the initial angular position of the detection device detecting the rotation angle of the rotating body 1, then half of the rotation angle at this time is input as the initial angular position of the reflecting body 7, and feedback control is applied to the reflecting body driving device.

If, without installing the above-described reflecting body driving mechanism or rotation angle detection device, only the reflecting body 7 is installed on the rotation axis 4, and employing a structure in which an optical path is formed between the rotating body 1 and the fixed body 2 by mating the rotating body 1 with the fixed body 2, a non-contact optical connector can be configured.

Further, a configuration without a reflecting body driving mechanism is substantially the same as a state in which input of the reflecting body driving mechanism is zero (driving halted), and so is one mode of use of a reflecting body driving design.

Further, this configuration without a reflecting body driving mechanism is substantially the same as a state in which the elastic constants of the elastic body driving device 50 are made extremely large (so that the reflecting body 7 hardly moves), and so is one mode of use of a reflecting body driving 50.

By means of these configurations, a non-contact optical connector differing from current contact designs using a ferrule can be configured.

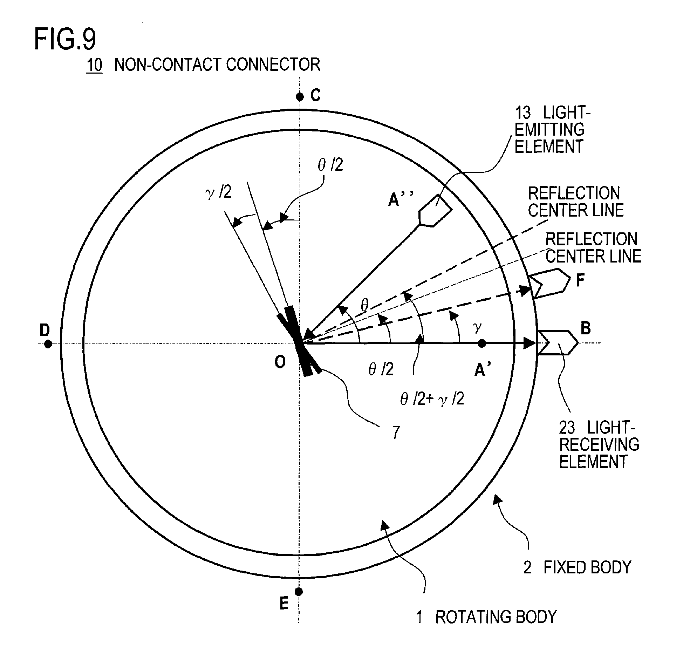

The configuration of this connector can be modified for switching functions to switch optical paths. Fig. 9 shows a (switch) example which switches from a light-emitting element 13 at position A" to a light-receiving element 23 at position F (a position removed by angle γ from position B).

As is shown in the figure, when the light-receiving element 23 rotates through γ from position B, if the reflecting body 7 rotates through γ/2 (in total, θ/2 + γ/2), then switching can be performed from the light-receiving element 23 at position B to the light-receiving element 23 at position F.

When the reflection center line is considered, whereas at the position of Fig. 3 the reflection center line was θ/2, at the position of Fig. 9 the reflection center line is θ/2 + γ/2, so that by rotating the reflecting body 7 by θ/2 + γ/2, switching from the light-receiving element 23 at position B to the light-receiving element 23 at position F can be performed.

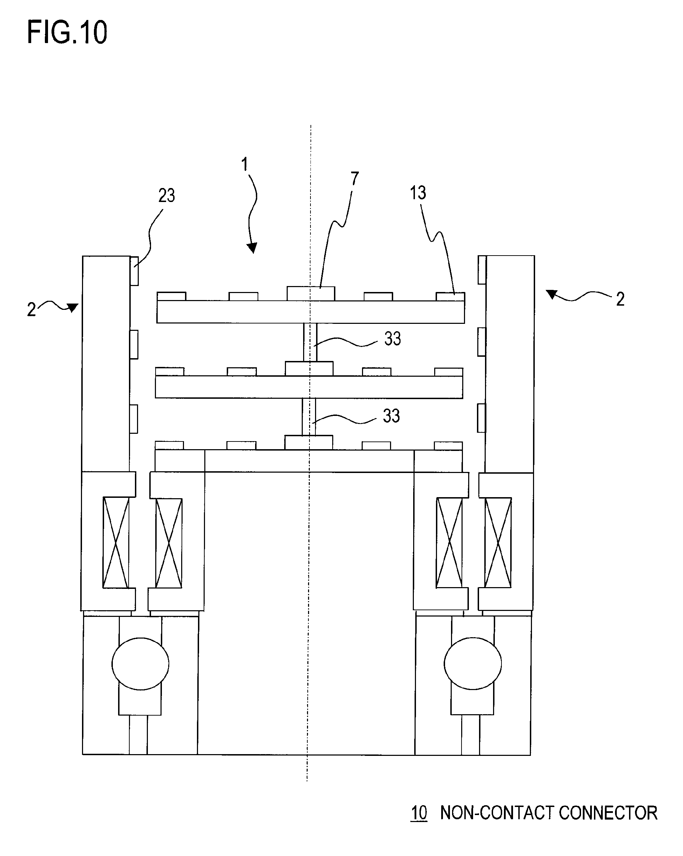

Fig. 10 is an example of the configuration of a multistage non-contact connector 1. In addition to the above-described non-contact connector 1 with a single-stage configuration, by employing a multistage configuration such as shown in Fig. 10, multichannel data transmission and reception can be performed. In this case, fixed-side optical elements 23 are provided on a side face of the fixed body 2, and in each stage an uninterrupted optical path, described above, is formed between a fixed-side optical element 23 and a rotation-side optical element 13. As described above, in each stage a plurality of rotation-side optical elements 13 and fixed-side optical elements 23 may be arranged, and light-emitting elements and light-receiving elements may be intermixed. The stages on the rotation side are connected by a shaft 33, mounted to enable rotation accompanying rotation of the rotating body 1.

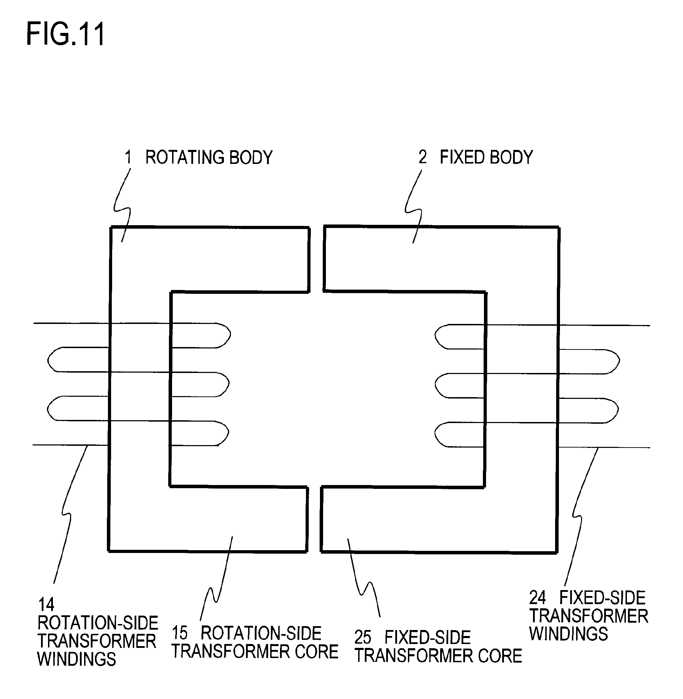

Next, power supply without contact from the fixed body 2 to the rotating body 1 is explained using Fig. 11. As explained above, rotation-side transformer windings 14 are wound about the trunk portion of the rotation-side transformer core 15 of the rotating body 1, and fixed-side transformer windings 24 are wound about the trunk portion of the fixed-side transformer core 25 of the fixed body 2. In this state, by passing a power supply current from the main unit device through the fixed-side transformer windings 24, a magnetic field is generated in the vicinity of the fixed-side transformer core 25. Through rotation operation of the rotating body 1, a magnetic circuit is formed by the rotation-side transformer core 15 positioned opposing the fixed-side transformer core 25 generating the magnetic field, and a current is generated (by the so-called law of electromagnetic induction) in the rotation-side transformer windings 14 wound about the trunk portion thereof. By this means, power is supplied to each portion of the rotating body 1, so that for example the rotation-side electrical circuit portion 11 is driven and rotation-side optical elements 13 emit light.

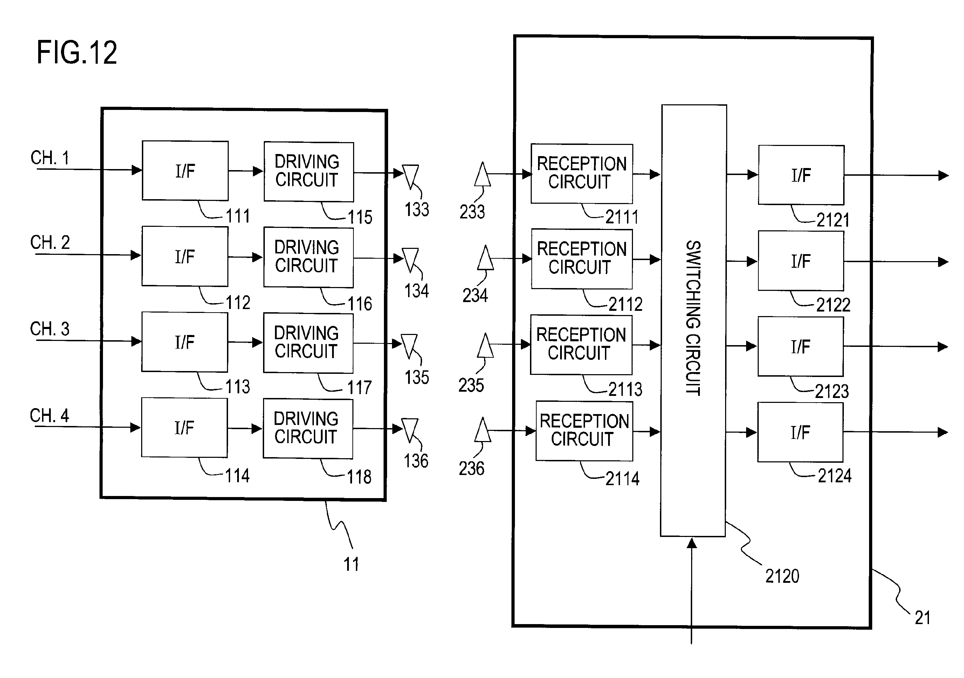

Next, Fig. 12 is used to explain details of the rotation-side electrical circuit portion 11 and fixed-side electrical circuit portion 21. In this example, the data for four channels (CH. 1 through CH. 4) is transmitted and received; data for one channel is transmitted and received between each of the rotation-side optical elements 133 to 136 and the corresponding fixed-side optical elements 233 to 236.

The rotation-side electrical circuit portion 11 comprises interface (I/F) circuits 111 to 114 to process data for each channel and driving circuits 115 to 118. Data from the main unit device is input to the I/F circuits 111 to 114 and converted into data which can be processed within the electrical circuit portion 11. Then, the driving circuits 115 to 118 convert this data into driving data, and based on the driving data, light is emitted from each of the rotation-side optical elements 133 to 136.

The fixed-side electrical circuit portion 21 comprises reception circuits 2111 to 2114, a switching circuit 2120, and I/F circuits 2121 to 2124. Data received by prescribed fixed-side optical elements 233 to 236 is converted within the reception circuits 2111 to 2114 into data which can be processed within the electrical circuit portion 21, and is output to the switching circuit 2120. In the switching circuit 2120, switching is performed to output data received in each channel to a prescribed output stage. By this means, data in the first channel is caused to be output from the I/F circuit 2122, data in the second channel is output from the I/F 2123, and similarly, data is caused to be output from the output stages desired by the user. In addition, switching control signals can be input to the switching circuit 2120 from an external device to cause switching to the desired stages (so-called multiplexer function).

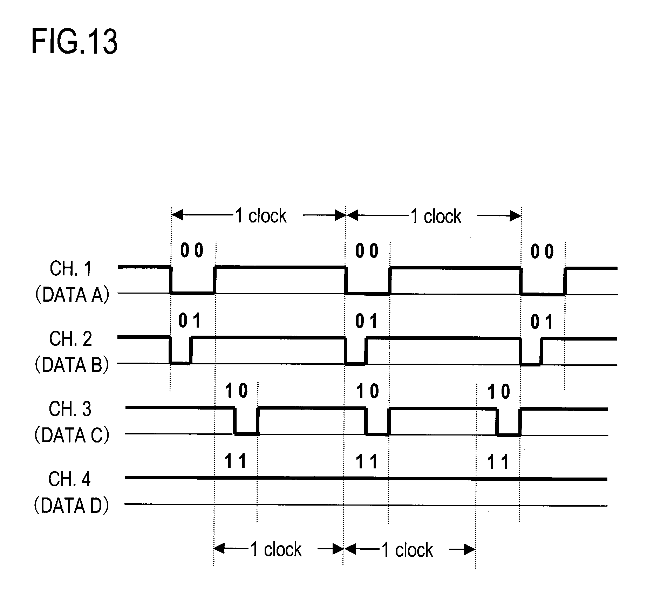

Further, as shown in Fig. 13, identification symbols may be appended to the data in each channel through processing by the main unit device, and these identification symbols may be discriminated by the switching circuit 2120 to perform switching. For example, when "00" is discriminated, data is caused to be output to I/F 2124 as data of a "first" channel, and similarly for other channels.

Such addition of channel identification symbols may be performed in a data processing circuit, not shown, of the main unit device connected to the fixed body 2, or may be performed by the driving circuits 115 to 118 of the rotation-side electrical circuit portion 11. Also, rather than adding channel identification symbols to all the data for all channels, symbols may be added to one among the plurality of channels, to perform channel discrimination (dedicated line system).

In this way, by adding identification symbols to data, when multichannel data is received by the fixed body 2, the channel of the data can be identified and the data output to the prescribed output stage, and the non-contact connector 10 can be provided with an automatic channel identification function.

In the example shown in Fig. 12, configurations of the electrical circuit portions 11, 21 are shown for a case in which the rotation-side optical elements 133 to 136 are light-emitting elements and the fixed-side optical elements 233 to 236 are light-receiving elements. In addition, the rotation-side optical elements 133 to 136 may be light-receiving elements, and the fixed-side optical elements 233 to 236 may be light-emitting elements. In this case, the rotation-side electrical circuit portion 11 comprises reception circuits 2111 to 2114, a switching circuit 2120, and I/F circuits 2121 to 2124, while the fixed-side electrical circuit portion 21 comprises I/F circuits 111 to 114 and driving circuits 115 to 118.

Also, the rotation-side optical element 13 and fixed-side optical element 23 may be replaced with optical fiber, and an optical path without interruption may be formed by the fixed-side optical fiber and rotation-side optical fiber.

## Claims

1. A non-contact connector, which comprises a rotation-side optical element positioned on a rotating body which rotates about a rotation axis, and a fixed-side optical element positioned on a fixed body, and which performs data transmission and reception without contact between the rotation-side optical element and the fixed-side optical element, wherein
a reflecting body, which reflects light emitted from the rotation-side optical element or from the fixed-side optical element, is provided on the rotation axis, and
the reflecting body comprises a cubic mirror, the outer shape of which is a rectangular parallelepiped, and which is formed by evaporation depositing a thin metal film on one face of one of two rectangular parallelepiped members that are transparent from the visible wavelength range to the infrared wavelength range, and then bonding the same to the other one of the rectangular parallelepiped members, with the evaporation-deposited film face intervening therebetween.

2. The non-contact connector according to Claim 1, wherein the cubic mirror has functions of a reflecting planar mirror in which visible-light waves and infrared-light waves irradiate a face perpendicular to the evaporation-deposited film face, the light is reflected at the evaporation-deposited film face, and the light is caused to be emitted from the face perpendicular to the evaporation-deposited film face.

3. The non-contact connector according to Claim 1 or 2, wherein an optical path, formed between the rotation-side optical element and the fixed-side optical element with the reflecting body intervening therebetween, intersects, substantially perpendicularly, the rotation axis, and
the optical path is formed between the rotation-side optical element and the fixed-side optical element with the reflecting body intervening therebetween, such that the rotation-side optical element or the fixed-side optical element receives light reflected from the reflecting body.

4. The non-contact connector according to Claim 1, 2 or 3, wherein the rotation-side optical element is positioned on a disc face of the rotating body perpendicularly intersecting the rotation axis, and the fixed-side optical element is positioned on a flat face of the fixed body substantially parallel to the disc face of the rotating body.

5. The non-contact connector according to any of Claims 1 to 4, wherein the reflecting body rotates about the rotation axis, and the reflecting body is configured such that the rotation velocity or rotation angle is half the rotation velocity or rotation angle of the rotating body.

6. The non-contact connector according to Claim 5, further comprising a first gear which rotates about the rotation axis together with the rotating body, a second gear which moves in rotation about the first gear, and a connecting portion which connects the second gear and the reflecting body, wherein
a gear ratio of the first gear and the second gear is set such that the movement velocity of the second gear is half the rotation velocity of the first gear.

7. The non-contact connector according to Claim 5 or 6, further comprising an elastic body on the rotating body, wherein
one end of the elastic body is connected to a first position on the rotating body, which rotates together with rotation of the rotating body, while another end of the elastic body is connected to a second position on the rotating body, the other end being spatially coupled by magnetic force to the fixed body and the elastic body not rotating accompanying rotation of the rotating body, and
the reflecting body is provided such that the reflecting face of the reflecting body is positioned on a line connecting the rotation axis with the substantial center of the line connecting the first position and the second position.

8. The non-contact connector according to Claim 5, 6, or 7, further comprising a detection portion which detects the rotation velocity or rotation angle of the rotating body, and a reflecting body driving portion which causes rotation of the reflecting body at half the rotation velocity or rotation angle detected by the detection portion.

9. The non-contact connector according to any preceding Claim, wherein
a plurality of the rotation-side optical elements are arranged at arbitrary positions on a disc face of the rotating body, and a plurality of the fixed-side optical elements are arranged on the fixed body, and
a plurality of the fixed-side optical elements are arranged on the fixed body such that optical paths are formed between the fixed-side optical elements and the rotation-side optical elements respectively via the reflecting body when the fixed-side optical elements are positioned on optical path line segments of incidence onto and reflection by the rotation-side optical elements and the reflecting body.

10. The non-contact connector according to any preceding Claim, wherein
a rotation-side light-emitting element and a rotation-side light-receiving element are arranged together in arbitrary positions on a disc face of the rotating body, and a fixed-side light-receiving element which receives light emitted from the rotation-side light-emitting element and a fixed-side light-emitting element which emits light toward the rotation-side light-receiving element are arranged together on the fixed body; and,
the fixed-side light-receiving element and the fixed-side light-emitting element are arranged together such that, when the fixed-side light-emitting element or the fixed-side light-receiving element is positioned on the optical path line segment of incidence onto and reflection by the rotation-side light-receiving element or the rotation-side light-emitting element and the reflecting body, an optical path is formed between the fixed-side light-receiving element or the fixed-side light-emitting element, and the rotation-side light-emitting element or the rotation-side light-receiving element, with the reflecting body intervening therebetween.

11. The non-contact connector according to any preceding Claim, wherein
in the rotating body and the fixed body, a plurality of stages of the rotation-side optical elements and of the fixed-side optical elements, within a plane substantially perpendicular to the rotation axis, are respectively arranged substantially parallel to the rotation axis, and, in each stage, an optical path is formed between the rotation-side optical element and the fixed-side optical element.

12. The non-contact connector according to any preceding Claim, further comprising a switching unit to which data received by the rotation-side optical element or by the fixed-side optical element is input, and which outputs the data to a required output stage among a plurality of output stages.

13. The non-contact connector according to any preceding Claim, further comprising a rotary transformer comprising a transformer core and transformer windings in each of the rotating body and the fixed body.

14. The non-contact connector according to any preceding Claim, wherein the rotation-side optical element and the fixed-side optical element comprise optical fibers, and an optical path is formed between the optical fibers.
